# FASCICULE DE BREVET EUROPEEN

(11) **EP 1 432 491 B1**
(45) Date de publication et mention de la délivrance du brevet: **20.09.2006**
(21) Numéro de dépôt: 02800164.2
(22) Date de dépôt: 30.09.2002
(51) Int. Cl.: B01D 35/027

(54) **STRUCTURE FILTRANTE**
FILTERKONSTRUKTION FÜR SCHWIMMBAD
FILTERING STRUCTURE FOR SWIMMING POOL

(30) Priorité: 01.10.2001 FR 0112635
(43) Date de publication de la demande: 30.06.2004
(73) Titulaire: Piscines Waterair S.A., 68580 Seppois le Bas (FR); Procopi S.A., 35653 Le Rheu (FR)
(72) Inventeur: BRAUN, Jacques, F-68580 Seppois Le Bas (FR); BAYSSE, Pierre, F-68580 Seppois Le Bas (FR); LE GUILLOU, Pierre, F-35653 Le Rheu (FR)
(74) Mandataire: Merckling, Norbert
(86) Numéro de dépôt international: PCT/FR2002/003333
(87) Numéro de publication internationale: WO 2003/028847

(56) Documents cités:
- EP-A- 0 544 610
- FR-A- 2 715 326
- US-A- 5 800 703
- US-A- 5 879 547

## Description

La présente invention concerne le domaine de la filtration d'eau d'une piscine, et se rapporte plus particulièrement à une structure filtrante destinée à être intégrée dans une des parois d'allure verticale d'un bassin de piscine.

Plusieurs dispositifs de filtration de ce type sont actuellement proposés. Ils comportent principalement une partie immergée dans l'eau du bassin de la piscine, dotée d'une bouche d'aspiration et d'un orifice de rejet de l'eau une fois filtrée. Ils comportent également des moyens de filtration et des moyens de pompage placés hors du bassin soit dans un local technique réalisé à cet effet à une distance plus ou moins importante de la piscine, soit dans un espace tel qu'un caisson directement adjacent à la partie immergée.

Les moyens de pompage et les moyens de filtration, tels que par exemple des filtres à sable ou à cartouche ou des poches filtrantes, sont reliés entre eux via une tuyauterie de raccordement, les premiers permettent un passage de l'eau à travers les seconds. L'ensemble est de plus relié à la bouche d'aspiration via une tuyauterie d'aspiration et à l'orifice de rejet via une tuyauterie de refoulement.

La présence de ces tuyauteries, même si elle est moins importante lorsque le dispositif de filtration et de pompage est sous forme de caisson, engendre inévitablement des pertes de charge diminuant les performances des systèmes connus. Ces pertes sont généralement compensées en utilisant des moyens de pompage "surdimensionnés", en particulier en ce qui concerne le moteur électrique. De plus, dans les dispositifs de l'art antérieur, la tuyauterie de raccordement passe souvent au-dessus de la ligne d'eau, ce qui entraîne des difficultés d'amorçage. '

L'emploi de moyens de pompage surdimensionnés entraîne nécessairement une augmentation des coûts de fabrication, mais également une consommation accrue en énergie et donc de la facture d'électricité du propriétaire d'une piscine munie de tels dispositifs.

L'ensemble de la tuyauterie doit impérativement être parfaitement étanche pour éviter les fuites ou prises d'air qui sont préjudiciables au bon fonctionnement de l'ensemble.

Par ailleurs, les dispositifs dont les moyens de pompage et de commande électrique sont disposés dans un local technique enterré adjacent ou éloigné de la partie immergée sont sujets à inondation en cas de fortes pluies, ce qui conduit inévitablement à des dégradations importantes du système de pompage ou impose des travaux importants et coûteux pour réaliser une évacuation gravitaire au fond du local technique.

Le but de l'invention est de remédier aux inconvénients mentionnés ci-dessus.

A cet effet, l'invention propose une structure filtrante destinée à être intégrée dans une des parois d'allure verticale d'un bassin de piscine, et comportant des moyens de filtration et des moyens de pompage constitués d'une partie électrique comprenant notamment un moteur électrique et d'une partie hydraulique dotée d'une turbine, ladite structure comportant une bouche d'aspiration donnant vers un couloir d'accès d'allure horizontale en partie immergé dans l'eau, et débouchant vers une cuve d'allure verticale placée en dessous de lui et dans laquelle sont disposés les moyens de filtration par exemple une poche filtrante, ladite cuve communiquant avec une colonne d'allure verticale, au moins une sortie étant prévue en aval de la partie hydraulique.

A titre d'exemple, le document FR-2 715 326 décrit une structure filtrante dont les moyens de pompage, incluant la partie électrique sont immergés dans le volume d'eau filtrée en dessous d'une cuve.

La caractéristique essentielle de cette structure réside en ce que la partie hydraulique des moyens de pompage est disposée en partie supérieure de la colonne d'allure verticale et en ce que la partie électrique des moyens de pompage est disposée en partie supérieure du couloir d'allure horizontale au-dessus du niveau de l'eau à traiter contenue dans le couloir d'accès d'allure horizontale, alors que la partie hydraulique des mêmes moyens de pompage est destinée à être immergée dans le volume d'eau filtrée de la colonne d'allure verticale.

Le couloir d'accès d'allure horizontale fait office de ce que l'homme de l'art désigne par l'anglicisme "skimmer", signifiant par là qu'il traite les couches superficielles de liquide, et constitue en fait un seul et même espace avec la cuve.

La structure filtrante ainsi configurée supprime totalement la tuyauterie d'aspiration et limite, voire supprime la tuyauterie de refoulement, le volume contenant les moyens de filtration étant directement attenant au volume contenant la partie hydraulique des moyens de pompage de l'eau.

Une telle disposition supprime totalement les pertes de charges dues aux tuyauteries telles qu'on peut les observer dans l'art antérieur et autorise l'utilisation de moyens de pompage plus économiques et moins consommateurs d'énergie.

La position du moteur au-dessus du niveau de l'eau permet de supprimer les étanchéités entre parties électriques et hydrauliques de la pompe toujours difficiles à réaliser et à maintenir. Enfin, le fait que le moteur soit positionné en partie supérieure de la structure filtrante plutôt que latéralement rend l'ensemble plus compact et plus facile d'accès.

De préférence, le moteur est supporté par un flasque constituant une partie de la face supérieure du couloir d'accès d'allure horizontale.

De préférence encore, le moteur électrique est en position verticale, sensiblement à l'aplomb de la partie hydraulique des moyens de pompage, la transmission entre ledit moteur électrique et ladite partie hydraulique se faisant à l'aide d'un arbre de transmission d'allure verticale traversant le couloir d'accès d'allure horizontale. Cette disposition permet de surcroît une bonne transmission du couple et de la vitesse du moteur à la partie hydraulique.

Il est toutefois envisageable de placer le moteur en position horizontale. Son arbre de sortie devient alors perpendiculaire à l'arbre de transmission d'allure verticale commandant la partie hydraulique. La transmission du mouvement du moteur se fait dans ce cas classiquement à l'aide d'engrenages coniques ou d'un renvoi d'angle.

Un carter disposé dans le couloir d'accès protège l'arbre de transmission entre le moteur électrique et la partie hydraulique des moyens de pompage.

Dans un souci d'améliorer plus encore la sécurité de l'invention, les organes électriques associés au moteur sont disposés au-dessus de l'eau, en partie supérieure du couloir d'accès d'allure horizontale.

En fait, ces organes électriques regroupent les commandes électriques traditionnelles de ses équipements, à savoir notamment un interrupteur marche arrêt, un minuteur, etc.

Leur accessibilité, notamment dans une perspective d'entretien, de réparation ou de mise en hivernage, est de plus rendue particulièrement facile par le fait que ces organes électriques sont contenus dans une cassette amovible. Celle-ci peut d'ailleurs être conformée de manière à entourer au moins en partie le corps du moteur. Cette caractéristique permet encore d'améliorer la compacité de l'ensemble.

On pourra ainsi aisément retirer cette cassette pour la placer en hivernage ou la réparer en déconnectant simplement lesdits organes électriques du moteur, qui sont reliés à l'aide de connexions rapides. Les réparations peuvent dès lors être facilement faites *in situ* ou si nécessaire en atelier ou à l'usine.

Le moteur électrique engendre par définition une certaine quantité de chaleur qu'il est nécessaire de disperser, dans la plupart des cas au moyen de ventilateurs. Or, la présence de tels ventilateurs est à l'origine de nuisances sonores importantes et augmente l'encombrement du moteur. Pour remédier à ce problème, le moteur électrique selon l'invention est de préférence doté de moyens de refroidissement constitués d'un circuit ouvert. Ce circuit ouvert entoure le corps du moteur électrique, une de ses extrémités étant immergée dans l'eau contenue dans le couloir d'accès alors que l'extrémité opposée est immergée soit dans la colonne d'allure verticale dotée des moyens de pompage, le circuit agissant alors en dépression, soit dans une tuyauterie de refoulement disposée en aval de la partie hydraulique contenue dans ladite colonne, le circuit agissant alors en pression.

En fait, ce circuit ouvert prend la forme d'un serpentin en matériau conducteur thermique dans lequel circule l'eau. Un tel système présente l'avantage de pouvoir de plus récupérer les calories du moteur électrique pour les restituer au bassin, agissant en fait comme un moyen de chauffage secondaire de l'eau.

De plus, il permet de réduire la hauteur de la structure filtrante, ce qui permet d'améliorer l'esthétique de ladite structure une fois que celle-ci est posée.

De préférence, la partie hydraulique des moyens de pompage comporte une sortie connectée via une tuyauterie de refoulement à un orifice de refoulement déporté latéralement d'un côté ou de l'autre de la bouche d'aspiration en fonction de l'hydraulicité que l'on souhaite donner au bassin.

Selon une autre configuration, cette partie hydraulique peut comporter deux sorties connectées via une tuyauterie de refoulement respectivement à deux orifices de refoulement déportés latéralement de part et d'autre de la bouche d'aspiration. La mise en fonction individuelle d'une des deux sorties ou simultanément des deux permet également de choisir l'hydraulicité du bassin.

Ainsi, l'utilisateur peut à sa convenance modifier les courants d'eau dans le bassin et exploiter au mieux la forme de la piscine, afin d'éviter des zones de stagnation où l'eau ne serait pas correctement renouvelée.

On comprendra mieux l'invention suite à la description faite plus en détail, en référence aux figures annexées dans lesquelles :
- la figure 1 est une vue en perspective d'une structure filtrante selon l'invention ;
- la figure 2 en représente une vue de côté en coupe longitudinale ;
- la figure 3 représente une vue arrière en perspective de ladite structure ;
- les figures 4 et 5 sont des vues de dessus permettant de voir plus en détail les éléments constitutifs de l'invention ;
- la figure 6 est une vue rapprochée montrant en perspective l'avant de la structure, côté bassin ; et
- la figure 7 est une vue schématique montrant le dispositif de refroidissement du moteur.

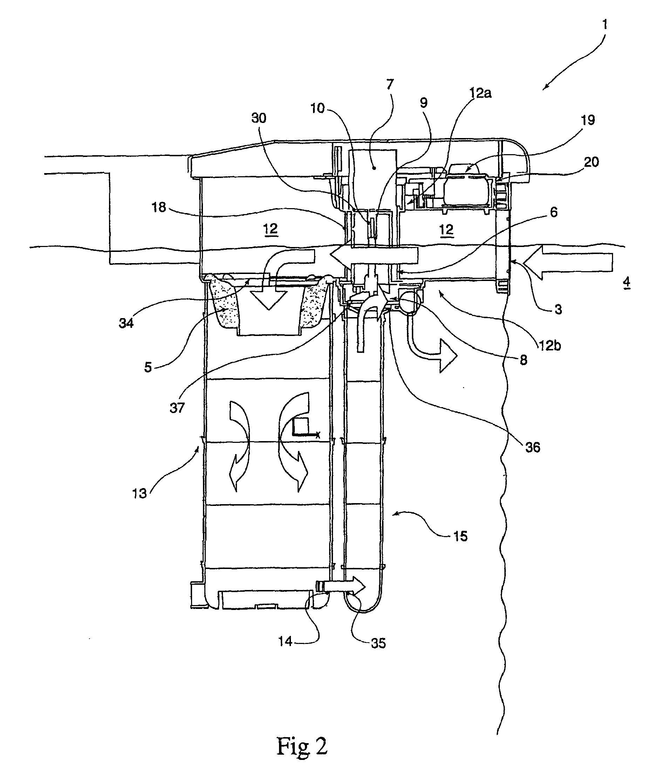

La structure filtrante (1) selon l'invention vient s'intégrer dans la paroi d'allure verticale (2) d'une piscine et comporte une bouche d'aspiration (3) en partie immergée dans l'eau (4) du bassin, dont le niveau est illustré à la figure 2 par un trait irrégulier.

En référence à cette figure, la structure filtrante (1) selon l'invention comporte également des moyens de filtration et des moyens de pompage (6). Les moyens de pompage (6) sont constitués d'un moteur électrique (7) associé à une partie hydraulique (8) se composant d'un flasque (36) dans lequel est logée une turbine (37), et destinée à être immergée dans l'eau au cours d'un cycle de filtration pour la déplacer. Le moteur électrique (7) entraîne la partie hydraulique (8) au moyen d'un arbre de transmission (9) sur lequel est fixée la turbine (37). Dans le mode de réalisation illustré notamment à la figure 2, le moteur (7) est en position verticale et son arbre de sortie (10) est accouplé à l'arbre de transmission (9).

La bouche d'aspiration (3) s'ouvre sur un couloir d'accès d'allure horizontale (12) également en partie immergé dans l'eau (4) du bassin. Ce couloir d'accès (12) est sensiblement parallélépipédique et sa face inférieure (12b) présente une ouverture (34) débouchant vers une cuve d'allure verticale (13).

Cette cuve (13) comporte des moyens de filtration que l'on exposera de manière plus détaillée dans la suite de la description. Elle présente en partie inférieure un orifice latéral (14) donnant via un orifice (35) vers la partie inférieure d'une colonne d'allure verticale (15). Cette dernière est orientée parallèlement à la cuve (13). Cette colonne joue le rôle d'aspiration en amont de la partie hydraulique (8) des moyens de pompage.

Suivant une variante de réalisation, le flasque (36) de la partie hydraulique peut être moulé dans le corps de la structure filtrante au niveau de la partie supérieure de la colonne (15).

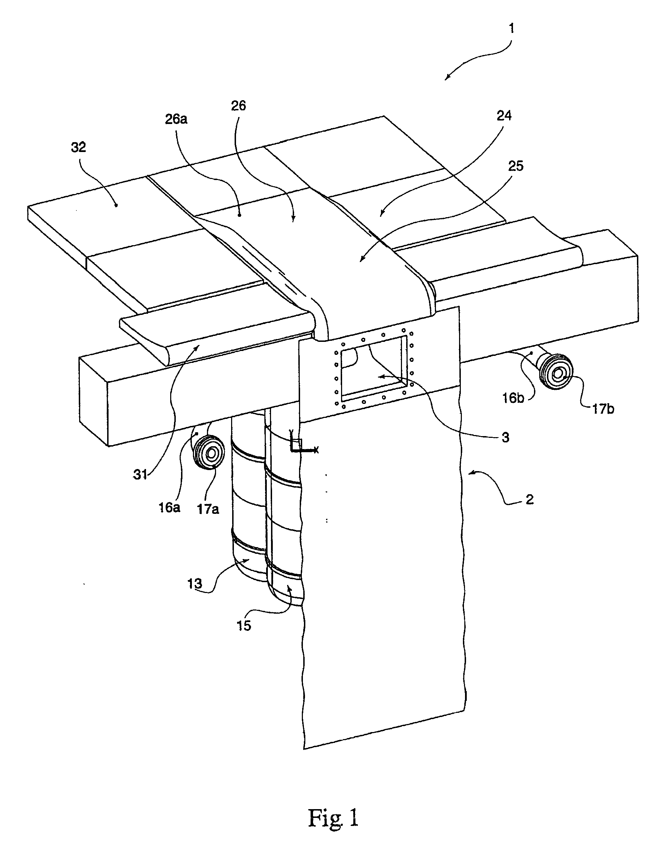

Deux sorties sont prévues au niveau de la partie hydraulique (8) permettant de diriger le flux d'eau via deux tuyauteries de refoulement (16a, 16b) vers deux orifices de refoulement (17a, 17b) déportés latéralement de part et d'autre de la bouche d'aspiration (3) (voir figure 1). Lors du montage, l'utilisateur pourra donc choisir l'orifice situé à droite ou à gauche de la bouche (3) en fonction du sens de rotation qu'il souhaite donner au flux d'eau du bassin. Il pourra également choisir d'utiliser les deux orifices (17a, 17b) à la fois afin de réaliser une "hydraulicité inverse", à savoir orienter le flux des refoulements vers la base de la paroi de la piscine opposée à la structure filtrante pour que le même flux revienne en surface vers la bouche d'aspiration (3).

La structure filtrante (1) telle qu'elle est décrite ci-dessus permet de supprimer, par rapport aux configurations de l'art antérieur, les tuyauteries d'aspiration et de raccordement entre la cuve (13) et la colonne (15) et de limiter la tuyauterie de refoulement (16).

Le moteur électrique (7) est disposé au-dessus du niveau de l'eau et est supporté par un flasque (30) constituant une partie de la face supérieure (12a) du couloir d'accès d'allure horizontale (12) (voir figure 2).

L'arbre de transmission (9), qui traverse en fait le couloir d'accès (12), est protégé par un carter (18) disposé entre les faces supérieures (12a) et inférieure (12b) de celui-ci. Ce carter (18) permet en outre d'interdire toute projection d'eau vers le moteur (7).

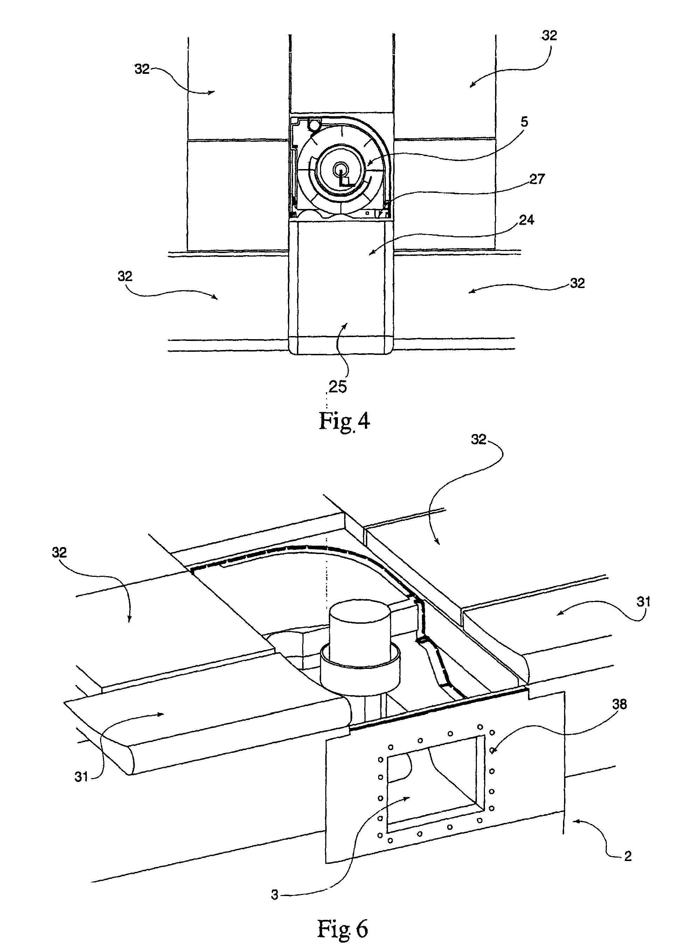

Les organes électriques (19) (voir figure 1) associés au moteur (7) sont également placés au-dessus du niveau de l'eau dans le couloir d'accès (12). Ces organes électriques sont de manière pratique positionnés dans une cassette (20) amovible. On peut d'ailleurs voir à la figure 6 la structure filtrante (1) lorsque celle-ci en a été retirée.

La cassette (20) est conformée de manière à entourer en partie le carter du moteur (7) (voir notamment figure 5), qui en dépasse vers le haut. Elle peut en outre comporter en partie supérieure une verrine (23) fixée pivotante. Cette verrine (23) permet de manière pratique d'accéder à certaines commandes électriques du moteur (interrupteur marche / arrêt, minuterie, etc...) en les protégeant contre d'éventuelles projections d'eau.

Suivant une variante non illustrée, la cassette (20) accueille également, dans des emplacements prévus à cet effet, les parties électriques associées à des appareils tels qu'une résistance chauffante et/ou un dispositif automatique de traitement de l'eau, par exemple un électrolyseur, ces appareils étant alors fixés sur la cassette et placés en contact avec l'eau dans le couloir d'accès (12), la cuve (13) et/ou la colonne (15).

Le fait de pouvoir ajouter un électrolyseur ou une résistance chauffante dans la cassette présente un réel avantage par rapport à l'art antérieur. En effet, cette configuration permet d'intégrer à la structure filtrante de nouveaux dispositifs techniques sans être obligé de rajouter des éléments supplémentaires tels qu'une tuyauterie, des raccords ou des moyens équivalents.

On aboutit donc à une simplicité dans l'installation de nouveaux dispositifs, une absence de pertes de charges dues aux tuyauteries et une suppression des risques de fuite. De plus, l'entretien de ces dispositifs optionnels peut se faire sans intervention sur la tuyauterie grâce notamment aux larges dimensions de la colonne d'aspiration et à la présence d'ouverture dans la cassette.

Un couvercle amovible (24) protège la face supérieure du couloir d'accès (12) et permet à un utilisateur ou à un technicien d'accéder aisément aux moyens de filtration et aux moyens de pompage.

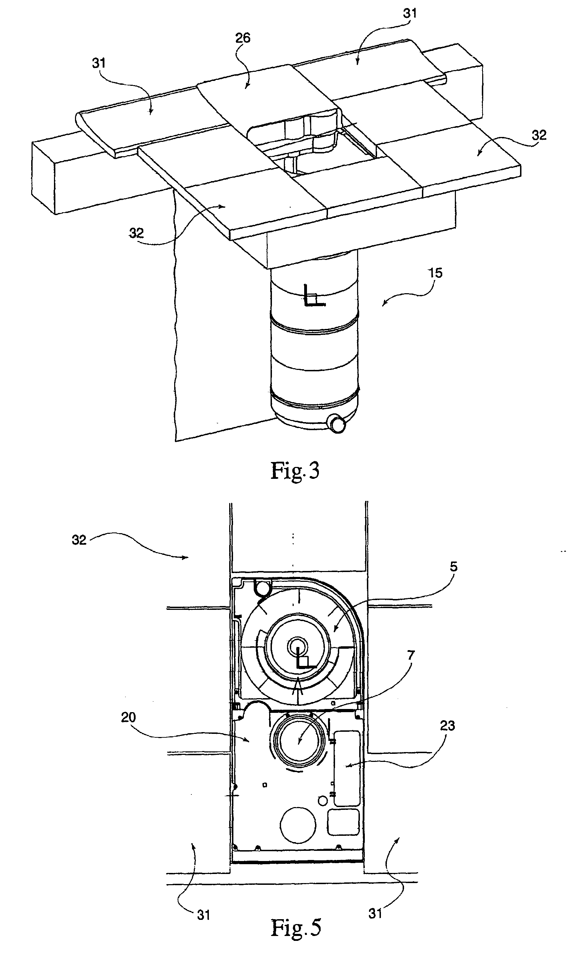

Ce couvercle (24) présente une partie avant ou proximale (25) du bassin et une partie arrière ou distale (26) donnant respectivement accès aux moyens de pompage et aux moyens de filtration. Les zones de contact de ces deux parties (25, 26) sont conformées entre elles de manière à ce que la dépose de la partie avant (25), qui protège en fait les parties électriques des moyens de pompage, soit tributaire de la dépose préalable de la partie arrière (26) (voir figure 3).

En fait, cette configuration du couvercle (24) est destinée à limiter au maximum les projections d'eau qui peuvent éventuellement survenir. Dans un même souci de sécurité, la partie avant (25) comporte en outre un loquet (27) de fermeture (voir figure 4), qui n'est par exemple déblocable qu'au moyen d'un outil tel qu'un tournevis.

Comme le montre la figure 1, le couvercle (24) s'intègre esthétiquement parfaitement au bassin ainsi qu'à son environnement direct. Il présente à cet effet une face extérieure dont le pourtour d'allure rectangulaire présente des bordures arrondies et un plan incliné (26a) raccordant une surface surélevée aux margelles (31) disposées le long du bassin, et au dallage (32) qui l'entoure.

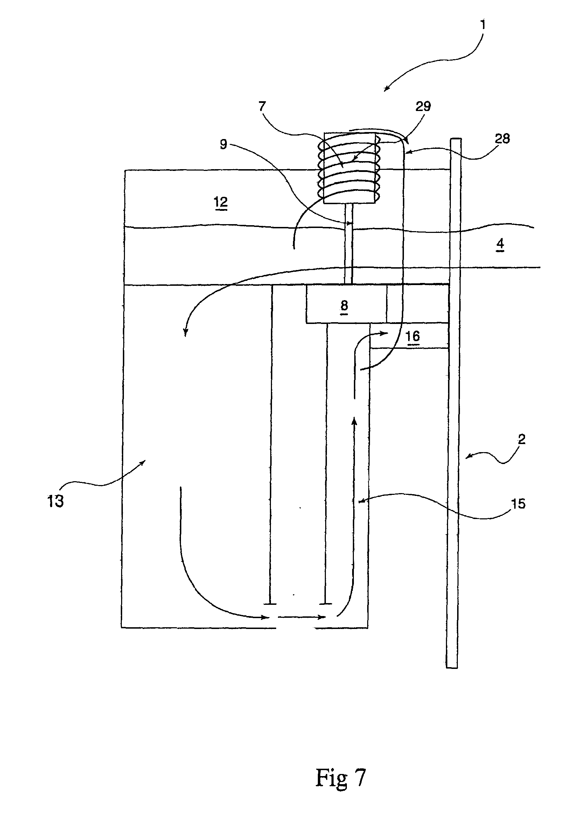

Le moteur électrique (7) comporte comme déjà mentionné des moyens de refroidissement, qui peuvent être réalisés par un circuit hydraulique ouvert (28) (voir figure 7), prenant la forme d'un serpentin (29) constitué d'un petit tuyau réalisé en matériau conducteur thermique enroulé autour du moteur, dans lequel transite l'eau du bassin. A cet effet, l'une des extrémités du circuit "barbotte" dans le couloir d'accès (12), alors que l'autre extrémité est placée dans la colonne d'allure verticale (15) dans la partie réalisant la colonne d'aspiration. Le circuit ouvert travaille alors en dépression.

Selon une variante de réalisation non illustrée, le circuit ouvert peut avoir une extrémité qui trempe dans le couloir (12) et son extrémité opposée qui est disposée dans la tuyauterie de refoulement (16), en aval de la partie hydraulique (8) des moyens de pompage (6). Le circuit ouvert travaille alors en pression.

Les moyens de filtration qui sont particulièrement adaptés à la structure filtrante (1) de l'invention prennent par exemple la forme d'un élément filtrant jetable (non représenté) comportant une poche extérieure de fort pouvoir filtrant et une poche intérieure de faible pouvoir filtrant, l'ensemble étant surmonté d'une pièce creuse (5) d'allure cylindrique évasée en partie supérieure et dotée à son extrémité supérieure d'une collerette venant coopérer avec l'ouverture (34) de la cuve (13) (voir figure 2).

Alternativement, il est également possible d'utiliser un filtre à sable ou un filtre à une ou plusieurs cartouches, connus en soi.

La description qui précède ne doit être considérée que comme un exemple de mise en oeuvre de l'invention, qui n'est nullement exhaustif de celle-ci. L'invention englobe au contraire toutes les variantes de formes et de configurations qui sont à la portée de l'homme de l'art.

## Revendications

1. Structure filtrante (1) destinée à être intégrée dans une des parois d'allure verticale d'un bassin de piscine, et comportant des moyens de filtration et des moyens de pompage (6) constitués d'une partie électrique comprenant notamment un moteur électrique (7) et d'une partie hydraulique (8) dotée d'une turbine, ladite structure comportant une bouche d'aspiration (3) donnant vers un couloir d'accès d'allure horizontale (12) en partie immergé dans l'eau, et débouchant vers une cuve d'allure verticale (13) placée en dessous de lui et dans laquelle sont disposés les moyens de filtration, ladite cuve communiquant avec une colonne d'allure verticale (15), au moins une sortie étant prévue en aval de la partie hydraulique,
**caractérisée en ce que** la partie hydraulique (8) des moyens de pompage (6) est disposée en partie supérieure de la colonne d'allure verticale (15) et **en ce que** la partie électrique des moyens de pompage (6) est disposée en partie supérieure du couloir d'allure horizontale (12) au-dessus du niveau de l'eau à traiter contenue dans le couloir d'accès d'allure horizontale (12), alors que la partie hydraulique des mêmes moyens de pompage (6) est destinée à être immergée dans le volume d'eau filtrée de la colonne d'allure verticale (15).

2. Structure filtrante (1) destinée à être intégrée dans une des parois d'allure verticale d'un bassin de piscine selon la revendication précédente, **caractérisée en ce que** le moteur électrique (7) est supporté par un flasque (30) constituant une partie de la face supérieure (12a) dudit couloir d'accès d'allure horizontale (12).

3. Structure filtrante (1) destinée à être intégrée dans une des parois d'allure verticale d'un bassin de piscine selon l'une des revendications 1 ou 2, **caractérisée en ce que** ledit moteur électrique (7) est en position verticale, sensiblement à l'aplomb de ladite partie hydraulique (8), la transmission entre ledit moteur électrique (7) et ladite partie hydraulique (8) se faisant à l'aide d'un arbre de transmission (9) verticale traversant le couloir d'accès d'allure horizontale (12).

4. Structure filtrante (1) destinée à être intégrée dans une des parois d'allure verticale d'un bassin de piscine selon la revendication précédente, **caractérisée en ce qu'**un carter (18) disposé dans le couloir d'accès d'allure horizontale (12) protège l'axe de transmission (9).

5. Structure filtrante (1) destinée à être intégrée dans une des parois d'allure verticale d'un bassin de piscine selon l'une quelconque des revendications précédentes, **caractérisée en ce que** des organes électriques (19) associés au moteur électrique (7) sont disposés au-dessus de l'eau, en partie supérieure du couloir d'accès d'allure horizontale (12).

6. Structure filtrante (1) destinée à être intégrée dans une des parois d'allure verticale d'un bassin de piscine selon la revendication précédente, **caractérisée en ce que** lesdits organes électriques (19) sont contenus dans une cassette amovible (20).

7. Structure filtrante (1) destinée à être intégrée dans une des parois d'allure verticale d'un bassin de piscine selon la revendication précédente, **caractérisée en ce que** ladite cassette (20) est conformée de manière à entourer au moins en partie le corps du moteur (7).

8. Structure filtrante (1) destinée à être intégrée dans une des parois d'allure verticale d'un bassin de piscine selon la revendication 6 ou 7, **caractérisée en ce que** la cassette (20) accueille les parties électriques associées à des appareils tels qu'une résistance chauffante et/ou un dispositif automatique de traitement de l'eau, ces appareils étant fixés sur la cassette et placés en contact avec l'eau dans le couloir d'accès (12), la cuve (13) et/ou la colonne (15).

9. Structure filtrante (1) destinée à être intégrée dans une des parois d'allure verticale d'un bassin de piscine selon la revendication 6 ou 7, **caractérisée en ce que** le moteur électrique (7) est doté de moyens de refroidissement constitués d'un circuit hydraulique ouvert (28).

10. Structure filtrante (1) destinée à être intégrée dans une des parois d'allure verticale d'un bassin de piscine selon l'une quelconque des revendications 1 à 9, **caractérisée en ce que** la partie hydraulique (8) des moyens de pompage (6) comporte une sortie connectée via une tuyauterie de refoulement (16a) ou (16b) à un orifice de refoulement (17a) ou (17b) déporté latéralement d'un côté ou de l'autre de la bouche d'aspiration (3) en fonction de l'hydraulicité que l'on souhaite donner au bassin.

11. Structure filtrante (1) destinée à être intégrée dans une des parois d'allure verticale d'un bassin de piscine selon l'une quelconque des revendications 1 à 9, **caractérisée en ce que** la partie hydraulique (8) des moyens de pompage (6) comporte deux sorties connectées via une tuyauterie de refoulement (16a, 16b) respectivement à deux orifices de refoulement (17a, 17b) déportés latéralement de part et d'autre de la bouche d'aspiration (3), la mise en fonction individuelle d'une des deux sorties ou simultanément des deux permettant de choisir l'hydraulicité du bassin.

## Claims

1. Filtering structure (1) designed to be incorporated in one of the nominally vertical walls of a swimming pool and comprising filtering means and pumping means (6) consisting of an electrical part comprising, in particular, an electric motor (7) and a hydraulic part (8) equipped with a turbine, said structure comprising a suction port (3) facing a nominally horizontal access passageway (12) partly immersed in the water and leading toward a nominally vertical tank (13) arranged thereunder and in which are arranged the filtering means, said tank communicating with a nominally vertical column (15), at least one outlet being provided downstream of the hydraulic part, **characterised in that** the hydraulic part (8) of the pumping means (6) is arranged in the upper part of the nominally vertical column (15) and **in that** the electrical part of the pumping means (6) is arranged in the upper part of the nominally horizontal passageway (12) above the level of the water to be treated contained in the nominally horizontal access passageway (12), whilst the hydraulic part of the same pumping means (6) is designed to be immersed in the volume of filtered water of the nominally vertical column (15).

2. Filtering structure (1) designed to be incorporated in one of the nominally vertical walls of a swimming pool according to the preceding claim, **characterised in that** the electric motor (7) is supported by a flange (30) forming one part of the upper face (12a) of said nominally horizontal access passageway (12).

3. Filtering structure (1) designed to be incorporated in one of the nominally vertical walls of a swimming pool according to either claim 1 or 2, **characterised in that** said electric motor (7) is in the vertical position, substantially perpendicular to said hydraulic part (8), the transmission between said electric motor (7) and said hydraulic part (8) being performed by means of a vertical transmission shaft (9) passing through the nominally horizontal access passageway (12).

4. Filtering structure (1) designed to be incorporated in one of the nominally vertical walls of a swimming pool according to the preceding claim, **characterised in that** a casing (18) arranged in the nominally horizontal access passageway (12) protects the transmission shaft (9).

5. Filtering structure (1) designed to be incorporated in one of the nominally vertical walls of a swimming pool according to any one of the preceding claims, **characterised in that** electrical equipment (19) associated with the electric motor (7) is arranged above the water, in an upper part of the nominally horizontal access passageway (12).

6. Filtering structure (1) designed to be incorporated in one of the nominally vertical walls of a swimming pool according to the preceding claim, **characterised in that** said electrical equipment (19) is contained in a removable cassette (20).

7. Filtering structure (1) designed to be incorporated in one of the nominally vertical walls of a swimming pool according to the preceding claim, **characterised in that** said cassette (20) is adapted to encompass at least partially the body of the motor (7).

8. Filtering structure (1) designed to be incorporated in one of the nominally vertical walls of a swimming pool according to claim 6 or 7, **characterised in that** the cassette (20) receives the electrical parts associated with equipment such as a heating resistor and/or an automatic water treatment device, this equipment being fixed to the cassette and placed in contact with the water in the access passageway (12), the tank (13) and/or the column (15).

9. Filtering structure (1) designed to be incorporated in one of the nominally vertical walls of a swimming pool according to claim 6 or 7, **characterised in that** the electric motor (7) is equipped with cooling means consisting of an open hydraulic circuit (28).

10. Filtering structure (1) designed to be incorporated in one of the nominally vertical walls of a swimming pool according to any one of claims 1 to 9, **characterised in that** the hydraulic part (8) of the pumping means (6) comprises an outlet connected via a backflow pipe (16a) or (16b) to a backflow outlet (17a) or (17b) laterally offset on either side of the suction port (3) according to the desired water flow rate to be conferred to the pool.

11. Filtering structure (1) designed to be incorporated in one of the nominally vertical walls of a swimming pool according to any one of claims 1 to 9, **characterised in that** the hydraulic part (8) of the pumping means (6) comprises two outlets respectively connected via a backflow pipe(16a, 16b) to two backflow outlets (17a, 17b) laterally offset on either side of the suction port (3), the individual operation of one of the two outlets, or of the two outlets simultaneously, allowing the water flow rate of the pool to be selected.

## Patentansprüche

1. Filtrieraufbau (1) zum Einfügen in eine der vertikal verlaufenden Innenwände eines Schwimmbeckens; und umfassend Filtrationsmittel und Pumpmittel (6), die aus einem elektrischen Teil gebildet sind, der insbesondere einen elektrischen Motor (7) und einen hydraulischen Teil (8) umfasst, der mit einer Turbine versehen ist, wobei der Aufbau eine Ansaugöffnung (3) umfasst, die einen horizontal verlaufenden Zugang (12), teilweise überflutet in dem Wasser, versorgt, und in einen vertikal verlaufenden Tank (13) mündet, der unter ihm angebracht ist und in dem die Filtrationsmittel angeordnet sind, wobei der Tank mit einem vertikal verlaufenden Rohr (15) verbunden ist, wobei mindestens ein Ausgang abwärts von dem hydraulischen Teil vorgesehen ist,
**dadurch gekennzeichnet, dass** der hydraulische Teil (8) der Pumpmittel (6) teilweise oberhalb des vertikal verlaufenden Rohrs (15) angeordnet ist und dass der elektrische Teil des Pumpmittels (6) teilweise oberhalb des horizontal verlaufenden Gangs (12) unterhalb der zu behandelnden Wasseroberfläche, die in dem horizontal verlaufenden Zugang (12) enthalten ist, während der hydraulische Teil des selben Pumpmittel (6) dazu bestimmt ist, in dem filtrierten Wasservolumen in dem horizontal verlaufenden Rohr (15), überflutet zu werden.

2. Filtrieraufbau (1) zum Einfügen in eine der vertikal verlaufenden Innenwände eines Schwimmbeckens gemäß dem vorhergehenden Anspruch, **dadurch gekennzeichnet, dass** der elektrische Motor (7) durch einen Flansch (30) gestützt wird, der einen Teil der oberen Seite (12a) des horizontal verlaufenden Zugangs (12), bildet.

3. Filtrieraufbau (1) zum Einfügen in eine der vertikal verlaufenden Innenwände eines Schwimmbeckens gemäß einem der Ansprüche 1 oder 2, **dadurch gekennzeichnet, dass** der elektrische Motor (7) sich in vertikaler Position, im wesentlichen senkrecht zu dem hydraulischen Teil (8) befindet, wobei die Übertragung zwischen dem elektrischen Motor (7) und dem hydraulischen Teil (8) mit Hilfe einer Antriebswelle (9) ausgeführt wird, die vertikal den horizontal verlaufenden Zugang (12) durchquert.

4. Filtrieraufbau (1) zum Einfügen in eine der vertikal verlaufenden Innenwände eines Schwimmbeckens gemäß dem vorhergehenden Anspruch, **dadurch gekennzeichnet, dass** ein Gehäuse (18) in dem horizontal verlaufenden Zugang (12) angeordnet ist, um die Antriebachse (9) zu schützen.

5. Filtrieraufbau (1) zum Einfügen in eine der vertikal verlaufenden Innenwände eines Schwimmbeckens gemäß einem der vorangehenden Ansprüche, **dadurch gekennzeichnet, dass** die elektrischen Elemente (19), die mit dem elektrischen Motor (7) verknüpft sind, unterhalb des Wassers, teilweise oberhalb des horizontal verlaufenden Zugangs (12) angeordnet sind.

6. Filtrieraufbau (1) zum Einfügen in eine der vertikal verlaufenden Innenwände eines Schwimmbeckens gemäß dem vorhergehenden Anspruch, **dadurch gekennzeichnet, dass** die elektrischen Elemente (19) in einer abnehmbaren Kassette (20) enthalten sind.

7. Filtrieraufbau (1) zum Einfügen in eine der vertikal verlaufenden Innenwände eines Schwimmbeckens gemäß dem vorhergehenden Anspruch, **dadurch gekennzeichnet, dass** die Kassette (20) derart angepasst ist, um zumindest eine Teil des Motorgehäuses (7) zu umgeben.

8. Filtrieraufbau (I) zum Einfügen in eine der vertikal verlaufenden Innenwände eines Schwimmbeckens gemäß einem der Ansprüche 6 oder 7, **dadurch gekennzeichnet, dass** die Kassette (20) die elektrischen Teile aufnimmt, die mit Geräten als Heizwiderstand und/oder einer automatischen Wasseraufbereitungsvorrichtung verknüpft sind, wobei diese Geräte auf der Kassette befestigt sind und in Kontakt mit dem Wasser in dem horizontal verlaufenden Zugang (12), dem Tank (13) und/oder dem Rohr (15) gebracht werden.

9. Filtrieraufbau (1) zum Einfügen in eine der vertikal verlaufenden Innenwände eines Schwimmbeckens gemäß einem der Ansprüche 6 oder 7, **dadurch gekennzeichnet, dass** der elektrische Motor (7) mit Kühlmittel versehen ist, die einen offenen hydraulischen Kreislauf bilden.

10. Filtrieraufbau (1) zum Einfügen in eine der vertikal verlaufenden Innenwände eines Schwimmbeckens gemäß einem der Ansprüche 1 bis 9, **dadurch gekennzeichnet, dass** der hydraulische Teil (8) der Pumpmittel (6) einen Ausgang umfassen, der über eine Rückfluss-Rohrleitung (16a) oder (16b) mit Rückfluss-Öffnungen (17a) oder (17b) verbunden ist, die seitlich auf der einen oder der anderen Seite der Ansaugöffnung (3) ausscheren, entsprechend der erwünschten Hydraulizität, die dem Becken geliefert werden.

11. Filtrieraufbau (1) zum Einfügen in eine der vertikal verlaufenden Innenwände eines Schwimmbeckens gemäß einem der Ansprüche 1 bis 9, **dadurch gekennzeichnet, dass** der hydraulische Teil (8) der Pumpmittel (6) zwei Ausgänge umfassen, die jeweils über eine Rückfluss-Rohrleitung (16a, 16b) mit zwei Rückfluss-Öffnungen (17a, 17b) verbunden sind, die seitlich auf der einen und der anderen Seite der Ansaugöffnung (3) ausscheren, wobei der individuelle Betrieb eines der beiden Ausgänge oder beide simultan ermöglicht, die erwünschten Hydraulizität des Beckens auszuwählen.
